# EUROPEAN PATENT APPLICATION

(11) **EP 4 589 806 A1**
(43) Date of publication of application: **23.07.2025**
(21) Application number: 24152766.2
(22) Date of filing: 19.01.2024
(51) Int. Cl.: H02J 13/00

(54) **AN OPERATION METHOD FOR ELECTRICAL DISTRIBUTION SYSTEMS**

(71) Applicant: Siemens Sanayi ve Ticaret A. S., 34870 Istanbul (TR)
(72) Inventor: Dursun, Erk, 06810 Ankara (TR); Hepsen, Suheyl, McKinney, 75069 (US)
(74) Representative: Siemens Patent Attorneys

(57) **Abstract**

According to the present invention, an operation method for electrical distribution systems is provided. Said operation method comprises the steps of, generating a graph structure for electrical distribution system, and using generated graph structure for controlling the electrical distribution system, wherein step of generating a graph structure for electrical distribution system comprises generating a physical topology showing the islands (I) and switch bays (B) of the electrical distribution system as well as topology connections between said islands (I) and switch bays (B), wherein said islands (I) comprise plurality of first components (1) and said switch bays (B) comprise plurality of second components (2); storing the events of components of said islands (I) and switch bays (B) as timestamps.

## Description

### Technical Field

Present invention is related to an operation method, using graph structure for electrical distribution systems.

### Prior Art

Electrical distribution systems have very large and complicated systems which have mostly radial or lightly mesh structure. Traditional operation of distribution grid based on the energy flow is from root node (connection point between transmission system and distribution system) to the leaf nodes (energy consumers). The flow is controlled by the equipment called switches. Status of switches changes the flow direction as a result of changing the grid structure.

The nature of radial structure, in case of any failure, some of the leaf nodes separate from energized island and cannot feed from the root node. This is an outage for consumer and it has some consequences for utility company. Firstly, utility cannot sell the energy to deenergized consumers during the outage. Another concern is, many countries have regulations related with outages and forces utilities to pay penalties to the customer that are effected by the outages. Finally, the operation metrics which are used in performance evaluation of utilities, are highly sensitive for outage duration and frequencies.

As a result of these concerns utilities are using situational awareness systems that allow to supervise and to control the system in real-time. A full model of static network representation is modelled into software systems and fed by real time measurements provided by sensors/crews on the field. System operators use the information from the system and orchestrate the grid structure (open/close switches) to be able to isolate/restorate consumers which are effected from faults.

The main part of situational awareness is called topology processor. Topology processor is mainly consist of online representation of grid connectivity and switch positions plus domain specific traverse algorithms works on that representations. The results of topology processor are used by many decision support applications. To be able to react topology changes in reasonable time, performance of topology processor is highly demandable.

Conventional topology processors for distribution management systems are designed for handling medium voltage networks which can be figured as a middleware layer between supplier layer and consumption layer. The main constraint to model low voltage network is related with sizing. On the other hand medium voltage networks are significantly smaller than low voltage networks but are the main supplier for several of them. It means that any possible failure on medium voltage side will effect multiple low voltage networks in parallel. That's why the importance of modelling and supervising the medium voltage network have been essential.

Patent document no. EP3682517A1 discloses a method for identifying the topology of an electric power network. According to this document, by using metering units, load of the system is estimated. However, according to this document, graph structure of the electrical distribution system cannot be generated in detail.

### Brief Description of the Invention

According to the present invention, an operation method for electrical distribution systems is provided. Said operation method comprises the steps of, generating a graph structure for electrical distribution system, and using generated graph structure for controlling the electrical distribution system, wherein step of generating a graph structure for electrical distribution system comprises generating a physical topology showing the islands and switch bays of the electrical distribution system as well as topology connections between said islands and switch bays, wherein said islands comprise plurality of first components and said switch bays comprise plurality of second components; storing the events of the first or second components of said islands and switch bays at least as timestamps. The respective first and second components are configured to generate respective events during operation, which events include respective data regarding the operation of the respective first or second component and respective timestamps with the time of the event occurred.

According to the present invention, in addition to the physical topology of the electrical distribution system, events of components of the electrical distribution system are used for generating graph structure. Therefore, said graph structure can be used by a data provider for further analytic application, or the output of these applications can be used for post-mortem analysis or determining the effects of the investment plans to the operation metrics. Accordingly, electrical distribution is able to be controlled more accurately and actual timewise.

Events can be for instance the registration process of a component within the network, e.g. at the topology processor, recognized and captured by a respective timestamp.

The topology processor can establish or update a graph structure according to the registered components during the operation of the electrical distribution system network, and not by load profiles as usual in prior art.

Such a registration can be performed by adding components to the graph or removing components from the graph, stored e.g. in the memory of the topology processor.

### Object of the Invention

The main object of the present invention is to provide an operation method for electrical distribution systems.

Another aim of the present invention is to provide an operation method using graph structure of the electrical distribution systems.

Another aim of the present invention is to provide an operation method using graph structure with timestamps.

### Description of Drawings

Figure 1 shows an exemplary graph structure generated by the method of the present invention.
Figure 2 shows another exemplary graph structure showing switch details.

The reference numbers as used in figures may possess the following meanings;

| | |
|---|---|
| Switch bay | (B) |
| Island | (I) |

| | |
|---|---|
| First component | (1) |
| Second component | (2) |
| First switch | (3) |
| Second switch | (4) |

### Detailed Description of the Invention

Electrical energy provides are expected to provide electricity to users all the time. However, due to unexpected problems, dramatic change in load, equipment errors, it is not possible to supply electricity to all users all the time. In order to at least determine the problems and analyse faults, graph structures (topology models) of the electrical distribution system can be used. Therefore, according to the present application, an operation method using a graph structure for electrical distribution systems is provided.

Operation method of the present application comprises the steps of, generating a graph structure for electrical distribution system, and using generated graph structure for controlling the electrical distribution system. Step of generating graph structure for electrical distribution systems of the present application comprises the steps of, generating a physical topology showing the islands (I) and switch bays (B) of the electrical distribution system as well as topology connections between said islands (I) and switch bays (B), wherein said islands (I) comprise plurality of first components (1) and said switch bays (B) comprise plurality of second components (2); storing the events of components of said islands (I) and switch bays (B) as timestamps.

In an exemplary embodiment of the present application, said operation method is used for controlling an electrical distribution system. In order to do so, graph structure of a low or medium voltage network is generated. In this embodiment, firstly a physical topology of the low or medium voltage network is generated by a topology processor. Said physical topology shows islands (I), switch bays (B) and topology connections between them. Said islands (I) may comprise nodes, lines, bus bars, and load as first component (1). Similarly, said switch bays (B) comprise switches, breakers, isolators, and fuses as second components (2). Said first components (1) may be connected to each other as well as second components (2). Generation of said physical topology is known in the art. According to the present application, in addition to said physical topology, events of components of said islands (I) and switch bays (B) are stored as timestamps. When said timestamps are added to the generated physical topology, graph structure is generated. Said timestamps enables to use the generated graph structure for calculating the energization state of the low or medium voltage network at any given time, tracking the physical evolution of the low or medium voltage network over time. Furthermore, generated graph structure may be used as a data provider for further analytic application, or the output of these applications can be used for post-mortem analysis or determining the effects of the investment plans to the operation metrics. In another exemplary embodiment, generated graph structure is used for energization analysis. Energization analysis is basically a traversal calculation starting from energy source(s) through all accessible equipment by considering switch states. Although, It is common for current time instance since the graph knows the current states of the component and switch state is processed as time interval of event, the proposed methodology can be used to find energized equipment for a given time interval. In another words, according to the present application, it possible to go to a desired time interval and examine the graph structure of said time interval. Furthermore, thanks to the island (I) and bay (B) structure of the present application, total number of the nods to be used in the traversal calculation is reduced. This is especially advantageous for the low voltage networks, since they normally have a large number of nodes. In other words according to the present application, traversal calculation for the low and medium voltage networks is performed in an easier way.

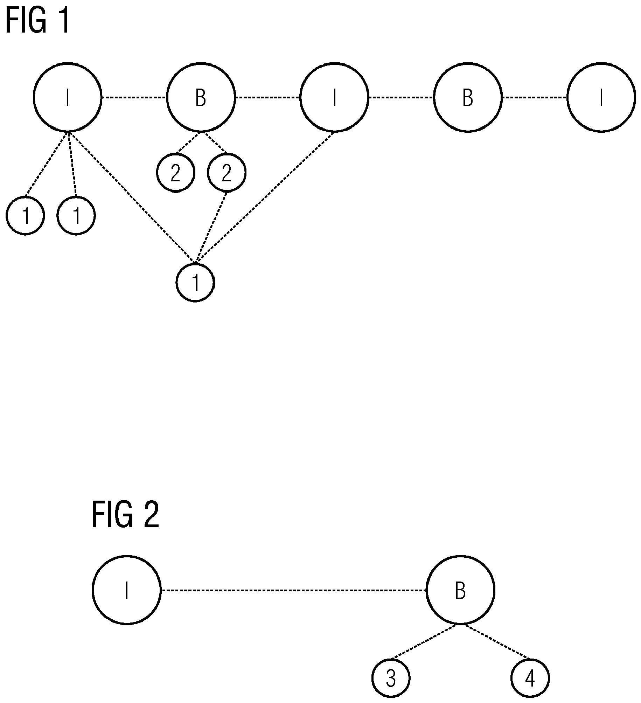

In a preferred embodiment of the present application, the events of the first and second components are generated by predefined time intervals, which are, in the step d, differently defined for each of the first and second components in step d. Said predefined time intervals are time interval properties adding and removing time regarding the event of the respective components. In an exemplary embodiment, a first switch (3) and a second switch (4) of a switch bay (B), shown in figure 2, are responsible for controlling connections of different first components (1) of an island (I). In this embodiment, when a first component (1) is connected to electrical distribution system through the first switch (3), timestamp for said addition is stored as a first parameter (showing connection time, for example time - 0). As long as said first component (1) is kept connected (first switch (3) is in closed state), a second parameter (showing disconnecting time) is kept as infinite. When said first component (1) is disconnected by the first switch (3), second parameter is updated as opening time of the first switch (3). Preferably, in the step of storing the events of components of said islands (I) and switch bays (B) as timestamps, arrays are used for storing the timestamps. Therefore, when said first switch (3) is closed again, connection time of the first component (1) is stored as a new first parameter. Assume that, said first switch (3) is closed in time 0. Initially, timestamp of the first switch (3) becomes "[0, ∞]". Then, if said first switch (3) is opened at time t1 and closed again at time t2, said timestamp becomes "[0, t1], [t2, ∞]". Thanks to said timestamp, it is possible to determine in which times said first switch (3) is open and close positions. Therefore, it is possible to determine in which times first component (1) is connected to electrical distribution system or not. This operation is also performed by second switch (4) and further switches of the switch bay (B). In this embodiment, for each switch, said timestamp information is stored with the id of the related switch. Therefore, timestamp of said first switch may become "SW1=[[0, t1], [t2, ∞]]". In this embodiment, since arrays are used for storing the timestamps, said timestamps can be used in computer implemented data structures. In other words, said arrays can be used as data flows, thus can be used by computer applications. Accordingly, timestamp data are able to be analysed by computer applications with ease and high accuracy.

In another preferred embodiment of the present application, when a first component (1) of an island (I) is disconnected from the electrical distribution system, generated physical topology is updated by removing related component from the network of the electrical distribution system and consequently from the graph structure. Therefore, said physical topology is constantly changing. In this embodiment, since only the components connected to electrical distribution system are in the physical topology, said physical topology is kept as simple as it can be. However, since it is possible to re-connect said first component (1) to the electrical distribution system, events of the first component (1) is kept as saved. Therefore, it is possible to track whenever a first component (1) is connected to electrical distribution system, without increasing the complexity of the physical topology. Accordingly in this embodiment, when a first component (1) of an island (I) is connected to the electrical distribution system, generated physical topology is updated by adding related component to the network of the electrical distribution system and consequently to the graph structure.

According to the present invention, in addition to the physical topology of the electrical distribution system, events of components of the electrical distribution system are used for generating graph structure. Therefore, said graph structure can be used by a data provider for further analytic application, or the output of these applications can be used for post-mortem analysis or determining the effects of the investment plans to the operation metrics. Accordingly, electrical distribution is able to be controlled more accurately.

In another preferred embodiment of the present application, the events include further data of the operation of the respective first or second component with respect to the respective timestamp, and the data are considered at the generation of the graph structure. Thus, the data, e.g. connection data between network nodes or load profiles of network components, can be considered at the graph structure to add further dynamic data regarding the operation of the network into the graph.

## Claims

1. An operation method for electrical distribution systems, **characterized by** comprising the steps of,
a. generating a graph structure for electrical distribution system, and
b. using generated graph structure for controlling the electrical distribution system
wherein, step of generating a graph structure for electrical distribution system comprises,
c. generating a physical topology showing islands (I) and switch bays (B) of the electrical distribution system as well as topology connections between said islands (I) and said switch bays (B), wherein said islands (I) comprise a plurality of first components (1) and said switch bays (B) comprise plurality of second components (2), which respective first and second components (1, 2) are configured to generate respective events during operation, which events include respective data regarding the operation of the respective first or second component (1, 2) and respective timestamps with the time of the event occurred;
d. storing the events of the first or second components (1, 2) of said islands (I) and switch bays (B) at least as timestamps.

2. An operation method according to claim 1, **characterized in that** the events of the first and second components (1, 2) are generated by predefined time intervals, which are, in the step d, differently defined for each of the first and second components (1, 2) in step d.

3. An operation method according to any one of the preceding claims, **characterized in that** in the step d, arrays are used for storing the timestamps.

4. An operation method according to any one of the preceding claims, **characterized by** comprising the step of when the first component (1) of the island (I) is disconnected from the electrical distribution system, updating generated physical topology by removing related component from the graph structure

5. An operation method according to any one of the preceding claims, **characterized by** comprising the step of when the first component (1) of the island (I) is connected to the electrical distribution system, updating generated physical topology by adding related component to the graph structure.

6. An operation method according to any one of the preceding claims, **characterized in that** said steps are performed by a topology processor.

7. An operation method according to any one of the preceding claims, **characterized in that** the events include further data of the operation of the respective first or second component (1, 2) with respect to the respective timestamp, and the data are considered at the generation of the graph structure.
